# EUROPEAN PATENT SPECIFICATION

(11) **EP 1 799 443 B1**
(45) Date of publication and mention of the grant of the patent: **21.05.2008**
(21) Application number: 05784337.7
(22) Date of filing: 19.09.2005
(51) Int. Cl.: B32B 5/26

(54) **TEXTILE CORE SANDWICH STRUCTURES**
SANDWICHSTRUKTUR MIT TEXTILKERN
STRUCTURE SANDWICH A NOYAU TEXTILE

(30) Priority: 22.09.2004 US 611709 P
(43) Date of publication of application: 27.06.2007
(73) Proprietor: Escom Composite Materials Ltd., 23100 Migdal Ha'Emek (IL)
(72) Inventor: HASCALOVICH, Pini, 34670 Haifa (IL); TOKARSKY, Boris, 17097 Nazareth Illit (IL)
(74) Representative: Zipse Habersack Kritzenberger
(86) International application number: PCT/IL2005/001003
(87) International publication number: WO 2006/033101

(56) References cited:
- WO-A-01/36189
- WO-A-03/024705
- US-A- 3 090 406
- US-A- 3 955 019
- US-A- 3 992 162
- US-A- 4 389 447
- US-A- 5 624 622

## Description

### Field of the Invention

The present invention relates to textile reinforced sandwich structures, and more particularly to bending and compression-resistant three dimensional composite textile-reinforced sandwich structures.

### Background

Typical composite sandwich structures have a fundamental pattern, which includes two faceplates, comparatively thin but with high strength and stiffness, enclosing a core structure (honeycomb or foamed), relatively thick but light, with high stiffness in the lateral direction. The components are bonded together and the structure functions like an I-beam. In most cases, a sandwich is considered efficient when the weight of the core is about 50% or less of the total weight, and the remaining 50% is the combined weight of the faceplates. The efficiency of a sandwich material is measured by the strength to weight ratio and proper adhesion between the layers.

The faceplates and the core play different roles: The faceplates carry the bending stresses, and the core carries the shear loads and lateral normal loads. When the core thickness is increased, the bending stresses are indirectly changed: The moment of inertia is increased; the strength to weight ratio is improved.

Textile reinforced laminated structures made of oriented threads are well known in the art. 2-D textile reinforcement and recently 3-D textiles are known ways to improve composite materials in general and particularly mechanical properties of sandwich structures. One problem with textile threads is that their best properties are in one direction - tensile (stretch). Bending and buckling usually are their weak points. Therefore, in order to reinforce materials using 3-D textiles, complex structures must be made, and then impregnated in polymers in order to create preforms, which are then inserted into the mold and foaming polymers are then cast/injected.

3-D composite sandwich structures can have many shapes and forms according to applications ranging from bathtubs to marine and air crafts. A 3-D fabric is used as spacer by sandwich manufacturers for skin to core bonding (WO 03/024705). After the skins are bonded to knitted spacer fabric, foam is introduced into the cavities of the fabric, and the fabric plays one role against delamination of the plies. In all these applications, stiffness of tread by bending is considered minor, and is not taken into account. Accordingly, the prior art teaches that threads are good for axial tension alone and are poor for compression because of their low bending stiffness. To withstand compression, it has been thought that the threads need to be side supported. For example, in faceplates production, fabric is used together with some matrix. References for such prior art teaching include "3D Textile Reinforcement in Composite Materials" by Antonio Miravete, University of Zaratoga, Spain, Woodhead Publishing Limited.

In the textile industry, flexibility of a thread is a very important property. The machinery of this industry has restrictions for bending stiffness of threads, due to mechanical limits. For example, steel wire cannot be processed on textile machines. Polymer fibers, like nylon threads, can be processed only for small or medium diameter (0.2-0.5 mm). The prior art teaches that threads when used in structures, supposedly cannot withstand any axial compression or bending, only tensile. Therefore, threads usually are submerged in some matrix preventing their lateral displacements. There are solitary cases of industrial application of textile without matrix that are not related to structures under loading.

Textile cores of 3-D composite sandwich structures may be either made of a mono- or multi- filament threads, the latter, however, being not stable under compression load. Mono-filaments of certain polymers can be stable.

US 4,389,447 describes a 3-D composite material made of face and back fabrics, which are linked with each other by rigid filaments, where the incorporation of the rigid filaments in the composite is meant to resist compression of the fabrics one against each other during preparation, and to allow air bubbles to escape, while impregnating the composite in a polymeric matrix.

In the present invention, high stiffness of threads by bending is considered a positive property. Stiff threads of textile are applied without matrix ("free" threads) in structures under loading, and stiffness of "free" threads may be improved by coating with some chemical or thermal treatment after the textile is produced.

It is therefore an object of the present invention to provide a textile sandwich structure, which comprises two faceplates and a compression resistant textile core.

It is another object of the present invention to provide a textile sandwich structure, where the reinforcing core is made of a monofilament, and the material of the filament may be any synthetic material.

Still another object of the present invention is to provide a textile sandwich structure, where the faceplates may be of either natural or synthetic materials, and/or fabricated, woven, or composites comprising a synthetic matrix and reinforcing fibers.

Still another object of the present invention is to provide a light-weight textile sandwich structure having high strength-to-weight ratio, and which is useful in various building applications.

Still another object of the present invention is to provide a textile sandwich structure that may be molded into a variety of shapes and forms in accordance with its end use or application, where the faceplates are parallel or not parallel to each other.

This and other objects of the present invention shall become clear as the description proceeds.

### Brief Description of the Drawings

Fig. 1A - is a schematic illustration of a textile sandwich structure with textile core.
Fig. 1B - describes a pressure applied upon a textile sandwich structure.
Fig. 2 (A, B, C, D) - demonstrates the internal loads produced by external spatially distributed pressure on a textile sandwich structure.
Fig. 3 (A, B, and C) - illustrates three possible arrangements of faceplate and core filament of a composite textile structure.
Figs. 4A and 4B - show a bending behavior of unreinforced laminate structure (Fig. 4A), and a bending behavior of a reinforced laminate structure with a core of rigid threads (Fig. 4B).
Fig. 5 - is an example of a textile sandwich structure having uneven dimensions.

### Detailed Description of the Drawings

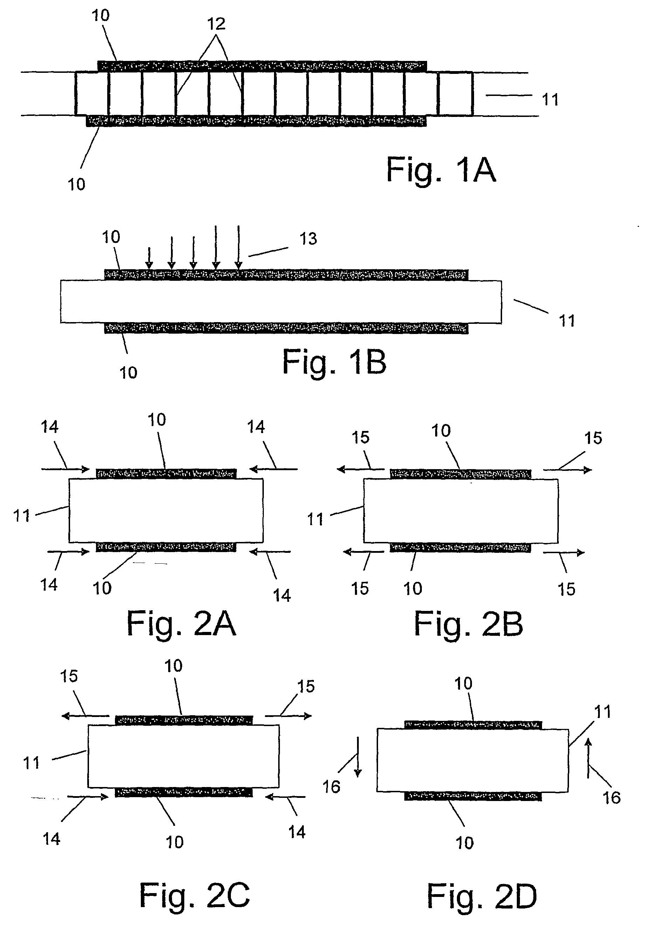

Fig. 1A represents a schematic illustration of textile core. The composite sandwich is comprised of two faceplates (10), which enclose a textile core (11). The textile core is composed of a filament thread (12), which is bonded to the faceplates in a way that provides them with a compression resistant force. In one particular embodiment, the free spaces locked in the textile core are partially filled with a polymeric foam, which is intended to produce additional improvement of the sandwich structure regarding acoustic and thermal isolation.

Fig. 1B illustrates schematically the sandwich structure of Fig. 1A while experiencing an external pressure (13) applied upon faceplates (10). This external pressure is distributed evenly on the faceplate surface, thus providing an even loading at each point of the textile core (11).

Fig. 2 specifies the different loads which may be implemented on a sandwich composite. Compression load, as demonstrated in Fig. 2A, is produced by applying equal counter-facing pressure in the X-Y plane of the two faceplates (14). The compression deformation that the sandwich structure undergoes depends on the elasticity of the faceplates (10) and core (11). Fig. 2B schematically describes stretching a sandwich structure by applying equal counter-heading forces (15) on its two faceplates (10) in the X-Y plane. Here too, the extent of deformation, whether elastic or inelastic, that the structure experiences, depends on the elasticity of its components, the faceplates (10) and the textile core (11). Fig. 2C describes a bending load, wherein each faceplate goes under an opposite-heading pressure in the X-Y plane. That is, while one faceplate is stretched (15), the other is compressed (14). The combined action of compressing and stretching results in bending of the composite structure towards the compressed faceplate, and the extent of deformation depends upon different variables of the composite as elasticity of its components. Finally, Fig. 2D describes a shear load taking place while applying counter-heading pressure (16) on the composite structure in the Z-axis. Here too, the amount of elastic and/or inelastic deformation that the structure will undergo depends on its intrinsic elasticity but also on the strength of bonding between the faceplates (10) and textile core (11).

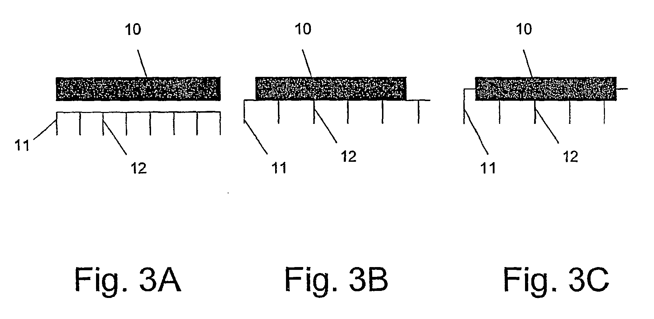

In Fig. 3 are shown three possible arrangements of the faceplates (10) and textile core (12) of the composite sandwich structure of the present invention. The first one, Fig. 3A, demonstrates an arrangement where the faceplate (10) and core (11) are connected only when a load compression is applied (non-holonomic connection), otherwise not being bonded to each other, and all threads (12) of the textile core being "free". This arrangement is useful in applications where shear forces take place in the faceplates and the core is loaded only by compression, as in an airplane wing or a propeller blade. The faceplates (10) are pressed against the core (11) upon compression loading. Fig. 3B shows bonding at the interface between the core (11) and faceplates (10). Such bonding may take place either by gluing or welding the textile core (11) to the faceplates (10) in a plurality of points of contact between them. In Fig. 3C the core (11) is integrated in the faceplates (10) by embedding the X-Y threads (12), which are interwoven in the monofilament, in the faceplate. This locking or clamping of the core in the faceplate increases the sandwich structure resistance to compression by a factor of 4.

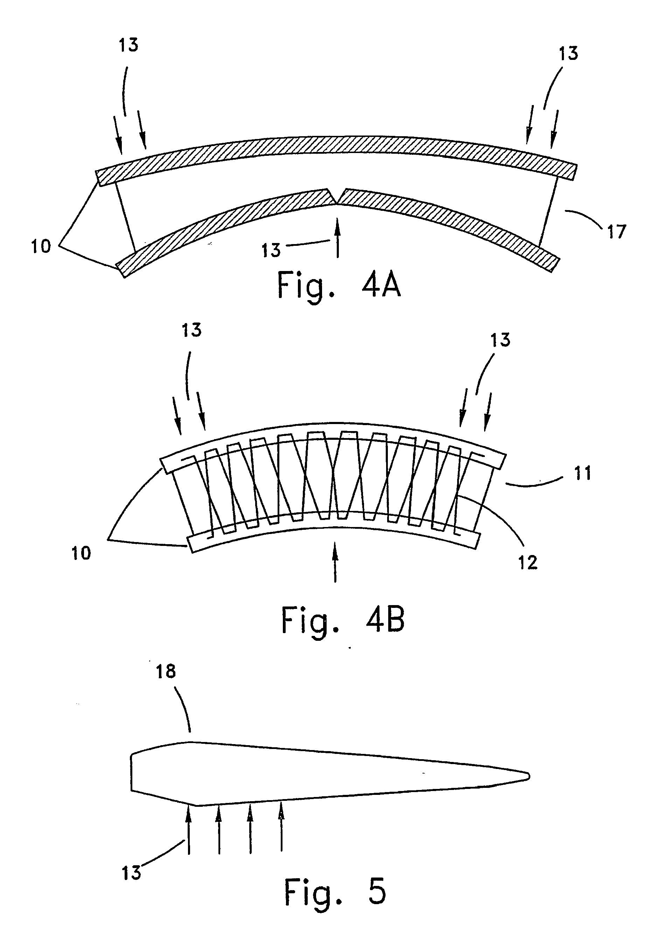

In Figs. 4A and 4B is shown by way of comparison the advantage of the textile core upon application of compression forces. The two Figures compare between a composite structure with a uniform unreinforced core (Fig. 4A), and a composite structure with a 3-D textile reinforcing core (Fig. 4B), when applying a three-point counter-facing bending load on their faceplates. As can be seen from the drawing in Fig. 4A, the composite with the unreinforced core (17) yields upon bending, showing an inelastic behavior until breaking at the point of applying the pressure (13). In contrast, the rigidity of the reinforcing core (11) of the composite structure in Fig. 4B, prevents the upper plate from being drawn to the lower plate upon bending, and the lower plate from being compressed towards the upper plate. The magnitude of the pressure on the lower plate equals that on the upper plate, and the result is, therefore, an elastic deformation of the structure, i.e., no cracking or breaking.

Fig. 5 is a schematic illustration of an example of an asymmetric structure (18) made of a composite of the present invention. The uneven dimensions of this structure along the X-axis demonstrate that the composite material of the present invention may be molded and shaped into a variety of structures depending on the functionality of the final product. Whatever the final shape may be, it does not make the composite structure lose its rigidity and resistance to compression upon application of an external load (13).

### Summary of the Invention

The present invention seeks to provide a textile reinforcement structure made of filament threads with a relatively high bending stiffness, as described in further detail below. Accordingly, the present invention shows that it is indeed possible to use threads without side support.

The present invention includes 3-D textile reinforcement embedded inside sandwich structures (Fig. 1A). Textile 3-D fabrics for structures are known in the art, and are usually used for forming sandwich panels. Threads stiffness is, however, usually low. In some cases, the matrix foamed cells support the structures, and prevent their instability by axial compression (buckling).

The present invention provides a textile sandwich structure with textile core that comprises two faceplates and a filament core, wherein the core filament is bonded to the faceplates at a plurality of contact points of the filament with said faceplates, the number of said bonded contact points being selected such that it provides a desired resistance to compression of the filament when a force is applied to one or both of the faceplates. A sample of such a sandwich the size of a human palm and 10 mm thick, made of 2 mm ABS faceplates and 0.4 Nylon 6 textile core, can sustain a compression load of nearly 1 Ton. The load is proportional to the number of threads in Z direction in 1 sq/cm of the textile core. If chemically coated, the strength increases up to 4-5 times.

In an aspect of the present invention, the contact between the faceplates and core may take place in three of the following forms:
a) the core filament is physically bonded to the faceplates in a plurality of contact bonding points (Fig. 3B).
b) the bonding of the core filament is achieved by integrating the bonded contact points into the faceplates.(Fig. 3C).
c) the faceplates become in contact with the core filament upon application of compression loading (Fig. 3A).

Thus, the contact between the faceplates and the core may be constant, lasting independently on the applied load, wherein the contact points bonding said core to said faceplates may be formed, for example, by welding, gluing, or potting; alternatively, the contact between the faceplates and the core may be formed only when compression load is applied, leading to non-holonomic connection.

In one preferred embodiment of the present invention as illustrated in Fig. 3B, the increased resistance of the sandwich structure of the present invention to buckling arises essentially from creating tight contact bonding points between the faceplates and the textile core by welding or gluing the core filament at these points or using an adhesion process for this purpose (using epoxy, polyurethane or acryl adhesives), and allowing it to locally mix with the faceplates. Another possible bonding system is to use melting strips of a polymer with lower melting point, and when heated the melted strips will bond to the faceplates and the 3-D textile core. Accordingly, each local point of the faceplates is strongly bound to the filament. Bonding the core and plates in a plurality of local points produces a highly compression-resistant sandwich structure that resists to buckling upon application of compression forces. This technique allows to dramatically improve compression-resistant strength of practically every composite sandwich structure made of two faceplates and a textile filament core regardless of the type and physical properties of the material of which the plates and core are made of, or the processes for their fabrication.

The core filament is made of a synthetic material, preferably selected from Polyamide (Nylon), Polyethylene, Polypropylene, Polyester, Polyvinyl, Acryl, Polycarbonate, Polystyrene Carbon, Basalt, etc.

In one aspect of the present invention, the strength to buckling of the composite structure depends on the number of points of bonding the core and plates, and their spatial density, and composite structures will exhibit different compression-resistant strengths, depending on the number of such points and their density. The present invention, therefore, offers, *inter alia*, textile composites having varying compression-resistant strengths, designed according to the particular function of the final product and the loading and forces applied on it.

In another preferred embodiment of the present invention, illustrated in Fig. 3C, the core filament is integrated in the faceplates, thereby operating, *inter alia*, as reinforcement to the faceplates themselves. In this configuration the core filament becomes locked in the faceplates, thereby increasing by at least four times the strength resistance to compression loading of the sandwich structure.

In still another preferred embodiment of the present invention, illustrated in Fig. 3A, the threads of the core filament are in "free" state as long as compression loading is not applied to the sandwich structure. Upon application of compression loading the faceplates are pressed against the filament core, which then carries the load.

In another aspect of the present invention, the core filament is made of an anisotropic material, which is spatially oriented in the Z-axis, i.e., perpendicular to the faceplates and to the fibers comprised in them. This property provides the core filament with an intrinsic resistance to compression. Anisotropic materials of which the filament is made of are practically synthetic ones, which have a long range ordering in one preferred direction over the other two. Non-limitative examples of such materials are crystalline or semi-crystalline nylon 6,6, isotactic polypropylene, and HDPE (High Density Polyethylene), Polyester, etc.

Despite the above, it is not to be construed that the present invention is limited in any way only to the use of anisotropically oriented materials for the fabrication of the filament core. Preferable materials may be selected from the following list:
Polyamide (e.g., PA 6), Polyester (e.g., PCT, PET, PTT), Polyurethane (e.g., PUR, EL, ED), Polyvinyl (e.g., CLF, PUDF, PVDC, PVAC), Acryl (PAN), Polyethylene, Polypropylene, Polycarbonate, PEEK, Polystyrene, Carbon, Basalt, etc.

Furthermore, in still another aspect of the present invention, synthetic non-anisotropic materials used as filaments for the textile core may be orientated or re-orientated in the Z-axis in order to provide the core with additional resistance to compression.

In one aspect, the present invention provides a combination of two faceplates, which may be made of a synthetic or natural fabric sheets, or a composite, which comprises a synthetic matrix and filaments, fibers or threads embedded in it and oriented in the X-Y plane, i.e., in parallel, and a textile core, wherein the textile is made of a filament oriented parallel to the Z-axis, i.e., perpendicular to the plates.

In a preferred embodiment, of the present invention, the synthetic matrix of the composite from which the faceplates are made of is selected from Thermosets like Epoxy, MF, PF, Polyester, PI, PU, SI, etc., and Thermoplastics like ABS, E/VAL, PTFE, Acetal, Acrylic, PAN, PA, PAI, PAEK, PBD, PB, PC, PK, Polyester, PEEK, PEI, PES, PE, PEC, PI, PMP, PPO, PPS, PTA, PP, PS, PSU, PVC, PVDC, TPE, etc., and the filaments, fibers or threads are made of Polyamide (e.g., PA 6), Polyester (e.g., PCT, PET, PTT), Polyurethane (e.g., PUR, EL, ED), Polyvinyl (e.g., CLF, PUDF, PVDC, PVAC), Acryl (PAN), Polyethylene, Polypropylene, Polycarbonate, PEEK, Polystyrene, Carbon, Basalt, etc.

In another preferred embodiment the present invention provides textile reinforced sandwich structures, wherein the two faceplates are positioned in a position which is either parallel or non-parallel to each other, wherein the distance between the two faceplates is respectively either constant or varying along the Z-axis of the sandwich structure. One of the dimensions is small relative to the other dimensions. Non-limiting examples are a wing of an airplane, a propeller or a turbine blade, or a product in the shape of a plate or shell (Fig. 5). The structure is made from laminates, including two faceplates and light core. A load is applied on the sample with some external distributed pressure as depicted in Fig. 1B. The effect of this pressure may be compression, stretch, bending, and shear of structure (Fig. 2).

The response of the faceplates and core of a sandwich structure of the present invention upon loading is as follows:
1. The faceplates withstand mainly to compression, stretch, and bend of structure.
2. The core loads itself with shear and inner compression in the lateral direction. This compression is created when one faceplate is drawn towards the other by bending using an external pressure, as demonstrated in Fig.4B.

Stresses in the core are usually very small relative to stresses in the faceplates. Therefore, strength and stiffness properties of the core may be lower than the ones of the faceplates. Minimizing the core properties is one of the main ways to improve structure properties and weight to strength ratio.

In the present invention, the core is made of threads oriented vertical to the plates and connecting both faceplates. These threads discharge the core from inner compression and prevent the faceplates to be drawn to each other by bending. Therefore, moments of inertia are not changed in this case, and the threads assist the faceplates to withstand bending load (Fig. 4B).

The threads have relatively high stiffness. For example, they may be made of nylon with a diameter of 0.3-0.5 mm. Therefore, the contribution of additional foam of to their stability is minor. As a result, the core may be produced from 3-D textile only, without additional matrix, thus improving the weight to strength ratio - meaning the mechanical properties of the structure.

In one non-limiting embodiment, the thread density is as high as 120 threads per square centimeter, and the threads are oriented laterally. The threads provide good resistance against low lateral compression without additional side support, in addition to the support achieved by their close proximity. As a result, the reinforcing core may be very light, and in some cases the textile reinforcement can replace the foamed core or the honeycomb core, thus improving the weight to strength ratio.

In one embodiment of the present invention, additional textile reinforcement to compression-resistance of a foamed core structure without giving up its advantage as light weight may be applied by partially filling the free space between the threads with a polymeric foam. Preferably such foam is selected from polyurethane, foamed acryl, PIM, foamed Epoxy, foamed PVC, foamed polyethylene, foamed Polypropylene, and the like.

In one aspect the present invention provides use of a sandwich structure with textile core as described above in the manufacturing of products for:
- Aerospace industries - Aircraft structural parts and accessories.
- Automotive industries - Passenger car bodies, doors, hoods and accessories, energy absorbing parts.
- Transport - Truck cabs, bus front and rear ends, side panels and structural components, energy absorbing parts, containers and refrigerated boxes.
- Train - Front end and panels for locomotives and wagons, light train structures and accessories.
- Marine industry - Small boats and yacht bodies, boat panels and internal walls, accessories.
- Construction industry - Out side facings, architectural elements, internal walls, finished elements for industrial construction.
- Sports and recreation - Protective vests and helmets.
- Military industry - Light and strong elements for arm systems and vehicles.
- Medical equipment - Structural components, CT and MRI benches.

### Examples

The present invention will now be demonstrated in a non-limitative way using the following Examples.

### Comparative Example 1

A comparative Example of a product made with a sandwich structure is a train double seat frame. The double frame is made of metal, and weighs 24 kg. The frame made in accordance with the present invention is made of a sandwich material, constructed integral skin polyurethane foam core reinforced with nylon textile grid. The double frame of the present invention weighs 9.5 kg, and is produced according to the relevant EU seat standard in one step and in one mold.

### Working Example 2

A double frame seat is prepared in accordance with the present invention, and weighs only 40% of the weight of the metal part of Comparative Example 1, and yet resists the same required forces in the required directions.

Another Example of demonstrating the light weight advantage of the sandwich structure of the present invention is a passenger car door as described in the following Examples 3 and 4.

### Comparative Example 3

A metal door (without all accessories and glass) weighs about 8 kg.

### Working Example 4

A sandwich door made of polyethylene facings, 5% foamed polyethylene core (for isolation purposes), and polyethylene textile grid for reinforcement weighs about 3.8 kg, and the grid reinforcement can be oriented laterally so the door will not need the additional side bar reinforcement for side collision. A further advantage is that such a door is also recyclable, being made of one material.

In summary, the present invention enables production of very light and complex shape sandwich products.

The following examples relate to different combinations of faceplates, core bonding of the composites, and their mechanical properties.

### Example 5

A 150x55x12 mm sample was tested using a 3-point loading fixture with 120 mm distance between supports.

A textile sandwich structure comprising Polypropylene 2mm thick faceplates, and a textile core of 0.4 Nylon 6 fibers (5mm height and 54 piles per sq/cm), sustained a bending load of 31.8 kg. Bonding with Epoxy like shown in Fig. 3B.

The same faceplates with a different textile core: 0.4 Nylon 6 (8mm height and 74 piles per sq/cm), sustained a bending load of 114 kg. Bonding like shown in Fig. 3C.

Said first core (0.4 Nylon 6 fibers 5mm height and 54 piles per sq/cm) with a 1mm thick Epoxy with Kevlar reinforcement faceplates, sustained a bending load of 187 kg. Bonding like shown in Fig. 3C.

### Example 6

A welding process of the textile core to the faceplates employs a thin melting strip with a lower melting point then the textile core and faceplates. The first step placing the strip on the inner side of the faceplates and pressing the textile core between them. The second step consists of heating the strip to its melting point, and then cooling it until it hardens. If the thickness of the melting strip is smaller than the thickness of the fibers in X - Y planes of the textile core, a connection like in Fig. 3B is obtained. If the thickness of the melting strip is larger than the fibers thickness in X - Y planes of the textile core, than a connection like in Fig. 3C is obtained. In the late example, the textile core resistance to compression loads increases by up to 4 times.

### Example 7

In cases of thermoplastic faceplates, the fibers of the textile core can be either from a polymer with a higher melting point, or can be coated with a protective layer. If the faceplates are heated up to their elastic point, the textile core is placed between them and pressed, so that the X - Y planes of the textile is embedded into the faceplates. Then the molds are cooled, the faceplates hardens, and the result is that the X - Y planes of the textile core are embedded into the faceplates, and act as a textile reinforcement of the faceplates without any additional reinforcement fabric.

While examples of the invention have been described for purposes of illustration, it will be apparent that many modifications, variations and adaptations can be carried out by persons skilled in the art, without exceeding the scope of the claims.

## Claims

1. A sandwich structure with textile core comprising two faceplates and a textile core, **characterized in that** the core comprises a three-dimensional textile made from anisotropic monofilament oriented in an axis substantially perpendicular to at least one of the faceplates and placed between the faceplates.

2. The sandwich structure as claimed in claim 1, wherein the monofilament comprises synthetic monofilament.

3. The sandwich structure as claimed in claim 1, wherein the textile core is bonded at a plurality of contact points to the faceplates.

4. The sandwich structure as claimed in claim 1, wherein portions of the textile core are integrated with the faceplates.

5. The sandwich structure as claimed in claim 1, wherein the textile core and the faceplates are connected when a load compression is applied.

6. The sandwich structure as claimed in claim 1, wherein the monofilament is made of a polymeric material selected from a group consisting of Poly amide, Polyester, Polyurethane, Polyvinyl, Acryl, Polyethylene, Polypropylene, Polycarbonate, PEEK, Polystyrene.

7. The sandwich structure as claimed in claim 1, wherein the monofilament is made of carbon and basalt.

8. The sandwich structure as claimed in claim 1, wherein the faceplates are made of materials selected from a group of materials consisting of: a synthetic or natural woven fabric, a composite comprising a synthetic matrix and reinforcing fibers, the fibers oriented substantially in parallel to the faceplates.

9. The sandwich structure as claimed in claim 8, wherein the faceplates are made from materials selected from a group of materials consisting of: thermosets, thermoplastics.

10. The sandwich structure as claimed in claim 1, wherein spaces in the core are filled with polymer foam.

11. The sandwich structure as claimed in claim 1, wherein the faceplates are substantially parallel with respect to one another.

12. The sandwich structure as claimed in claim 1, wherein the faceplates are non-parallel with respect to one another.

13. The sandwich structure as claimed in claim 1, wherein the faceplates and the core are made form the same material.

## Patentansprüche

1. Sandwichstruktur mit Textilkern umfassend zwei Abdeckplatten und einen Textilkern, **dadurch gekennzeichnet, dass** der Kern ein dreidimensionales Gewebe umfasst, das aus einem anisotropen Monofilament besteht, welches an einer im Wesentlichen zu mindestens einer der Abdeckplatten senkrecht verlaufenden Achse ausgerichtet ist und zwischen den Abdeckplatten angeordnet ist.

2. Sandwichstruktur nach Anspruch 1, wobei das Monofilament synthetisches Monofilament umfasst.

3. Sandwichstruktur nach Anspruch 1, wobei der Textilkern an mehreren Berührungspunkten an die Abdeckplatten gebunden ist.

4. Sandwichstruktur nach Anspruch 1, wobei Abschnitte des Textilkerns in die Abdeckplatten eingebunden sind.

5. Sandwichstruktur nach Anspruch 1, wobei der Textilkern und die Abdeckplatten nur verbunden sind, wenn eine Drucklast ausgeübt wird.

6. Sandwichstruktur nach Anspruch 1, wobei das Monofilament aus einem Polymermaterial besteht ausgewählt aus der Gruppe bestehend aus Polyamid, Polyester, Polyurethan, Polyvinyl, Acryl, Polyethylen, Polypropylen, Polycarbonat, PEEK, Polystyrol.

7. Sandwichstruktur nach Anspruch 1, wobei das Monofilament aus Kohlenstoff und Basalt besteht.

8. Sandwichstruktur nach Anspruch 1, wobei die Abdeckplatten aus Materialien hergestellt sind ausgewählt aus der Gruppe bestehend aus einem synthetischen oder natürlichen Gewebe, einem Verbundstoff, der eine synthetische Matrix und Verstärkungsfasern umfasst, besteht, wobei die Fasern im Wesentlichen parallel zu den Abdeckplatten ausgerichtet sind.

9. Sandwichstruktur nach Anspruch 8, wobei die Abdeckplatten aus Materialien hergestellt sind ausgewählt aus der Gruppe bestehend aus Duroplasten, Thermoplasten.

10. Sandwichstruktur nach Anspruch 1, wobei Leerräume im Kern mit Polymerschaum gefüllt sind.

11. Sandwichstruktur nach Anspruch 1, wobei die Abdeckplatten im Wesentlichen parallel zueinander liegen.

12. Sandwichstruktur nach Anspruch 1, wobei die Abdeckplatten nicht parallel zueinander liegen.

13. Sandwichstruktur nach Anspruch 1, wobei die Abdeckplatten und der Kern aus dem gleichen Material bestehen.

## Revendications

1. Structure sandwich ou multicouche avec une âme en textile comprenant deux plaques frontales et une âme en textile, **caractérisée en ce que** l'âme comprend un textile tridimensionnel fabriqué à partir d'un monofilament anisotrope orienté selon un axe essentiellement perpendiculaire à l'une au moins des plaques frontales et placé entre les plaques frontales.

2. Structure sandwich selon la revendication 1, dans laquelle le monofilament comprend un monofilament synthétique.

3. Structure sandwich selon la revendication 1, dans laquelle l'âme en textile est liée, attachée ou adhère en une pluralité de points de contact aux plaques frontales.

4. Structure sandwich selon la revendication 1, dans laquelle des parties de l'âme en textile sont intégrées aux plaques frontales.

5. Structure sandwich selon la revendication 1, dans laquelle l'âme en textile et les plaques frontales sont uniquement liées lorsqu'une compression par une charge est appliquée ou exercée.

6. Structure sandwich selon la revendication 1, dans laquelle le monofilament fabriqué à partir d'un matériau polymère choisi dans le groupe constitué par un polyamide, un polyester, un polyuréthane, un composé polyvinylique, un composé acrylique, un polyéthylène, un polypropylène, un polycarbonate, une PEEC, un polystyrène.

7. Structure sandwich selon la revendication 1, dans laquelle le monofilament constitué de carbone et de basalte.

8. Structure sandwich selon la revendication 1, dans laquelle les plaques frontales sont constituées de matériaux choisis dans le groupe de matériaux constitué par un tissu tissé synthétique ou naturel, un composite comprenant une matrice synthétique et des fibres de renfort, les fibres étant orientées essentiellement parallèlement aux plaques frontales.

9. Structure sandwich selon la revendication 8, dans laquelle les plaques frontales sont constituées à partir de matériaux choisis dans le groupe de matériaux constitué par les composés thermodurcissables et les composés thermoplastiques.

10. Structure sandwich selon la revendication 1, dans laquelle les espaces dans l'âme sont remplis d'une mousse de polymère.

11. Structure sandwich selon la revendication 1, dans laquelle les plaques frontales sont essentiellement parallèles les unes aux autres.

12. Structure sandwich selon la revendication 1, dans laquelle les plaques frontales ne sont pas parallèles les unes aux autres.

13. Structure sandwich selon la revendication 1, dans laquelle les plaques frontales et l'âme sont constituées à partir du même matériau.
